# EUROPEAN PATENT SPECIFICATION

(11) **EP 0 309 592 B1**
(45) Date of publication and mention of the grant of the patent: **21.06.1995**
(21) Application number: 88903375.9
(22) Date of filing: 15.04.1988
(51) Int. Cl.: G05B 19/408

(54) **ROBOT CONTROLLER**
REGELEINHEIT FÜR ROBOTER
UNITE DE COMMANDE DE ROBOT

(30) Priority: 15.04.1987 JP 92866/87
(43) Date of publication of application: 05.04.1989
(73) Proprietor: FANUC LTD., Minamitsuru-gun, Yamanashi 401-05 (JP)
(72) Inventor: MIZUNO, Tohru Seiseki Sakuragaoka Parkhomes 901, Tama-shi Tokyo 206 (JP); KOSAKA, Tetsuya Fanuc Utsukiryo, Hachioji-shi Tokyo 192 (JP)
(74) Representative: Billington, Lawrence Emlyn
(86) International application number: PCT/JP88/00374
(87) International publication number: WO 88/08158

(56) References cited:
- EP-A- 0 067 446
- EP-A- 0 074 412
- EP-A- 0 086 848
- JP-A- 5 914 009
- JP-A-60 237 507
- JP-A-61 236 457

## Description

This invention relates to a robot control apparatus for programmably controlling a taught/playback-type robot.

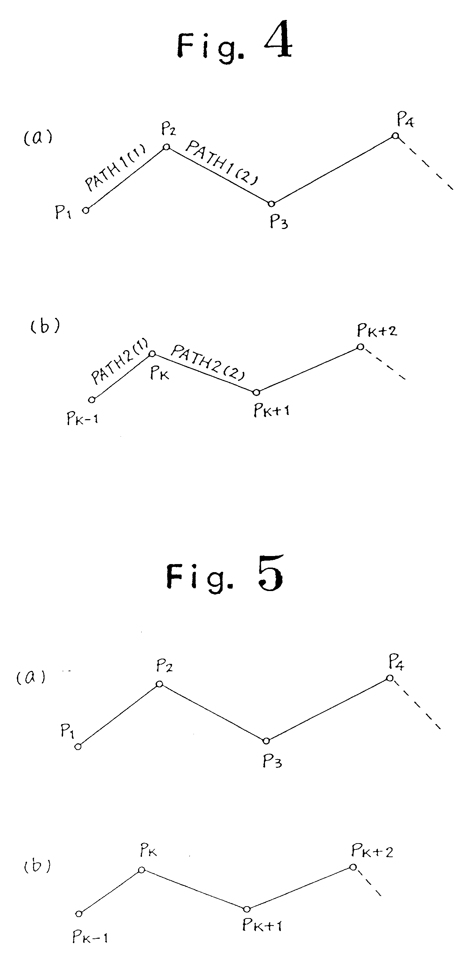

In order to programmably control a robot having a plurality of controlled axes along a predetermined motion path, it is usually required that the robot be taught designated points successively and that the points be stored in a data memory. In the teaching of such robot command data, addresses indicating at which locations of the data memory the taught data are to be stored are set and displayed, and target positions at which motions are to be performed as well as motion velocities are designated while actually moving a robot hand by a teaching panel or the like. The taught position data usually are stored upon naming them, as shown at P₁, P₂, ... in Fig. 5(a) and Pₖ₋₁, Pₖ,... in Fig. 5(b).

It has recently become possible to have robots execute complicated activities. For this reason, the abovementioned conventional method of storing taught points involves a large number of taught target points and increased program length. When a motion program is to be modified, moreover, it is difficult to see the correspondence between the program and the motion paths, so that a particular inconvenience is that rewriting position data requires a great amount of time.

EP-A-0 086 848 provides an example of this prior art, in accordance with the preamble of attached claim 1. Thus EP-A-0 086 848 discloses a robot control apparatus for programmably controlling a taught/playback-type robot, comprising a teaching panel for teaching robot motion target positions and motion velocities along a predetermined robot path, thereby to create a plurality of robot command data to move the robot along the predetermined motion path, and a data memory for storing the robot command data.

EP-A-0 067 446 also discloses a robot control apparatus, but adapted for the control of a system of a plurality of robots and in which a robot control data dividing processor divides operation sequence data into operation sequence element data for controlling the respective robots in the whole robot system.

The present invention has been devised to solve the problems mentioned hereinbefore and associated with the abovementioned conventional method of storing taught points involving a large number of taught target points and increased program length. Its object is to provide a robot control apparatus in which motion commands and position data in a robot motion program are made easy to see and readily manageable robot command data can be created.

According to the present invention there is provided a robot control apparatus for programmably controlling a taught/playback-type robot, comprising: a teaching panel for teaching robot motion target positions and motion velocities along a predetermined robot motion path, thereby to create a plurality of robot command data to move the robot along the predetermined motion path; and a data memory for storing the robot command data; characterised by: data converting means for converting said plurality of robot command data which defines the predetermined robot motion path into position data groups defining respective successive portions of said predetermined robot motion path, and for converting each of said position data groups into a set of robot command data also comprising other robot command data, the data converting means being operable to store the sets of robot command data in the data memory; and processing control means for creating robot motion data by editing the sets of robot command data in the data memory.

Thus, the robot control apparatus of the present invention converts a group of position data contained in a plurality of robot command data into set-type command data together with other robot command data and stores the converted command data. Therefore, by suitably assigning names to these data, readily manageable robot command data can be created. Even if there are many taught points for robot motion, conversion is made into set-type data which simultaneously incorporates various information such as travelling velocity at these positions besides the position data, and these data are stored. This makes the robot command data easy to manage.

### Brief Description of the Drawings

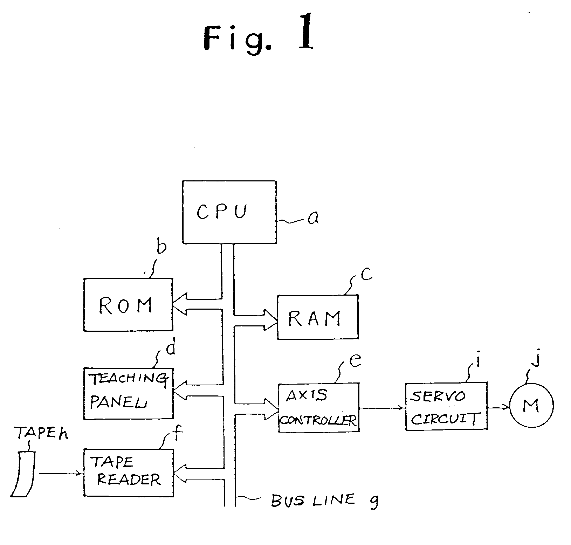

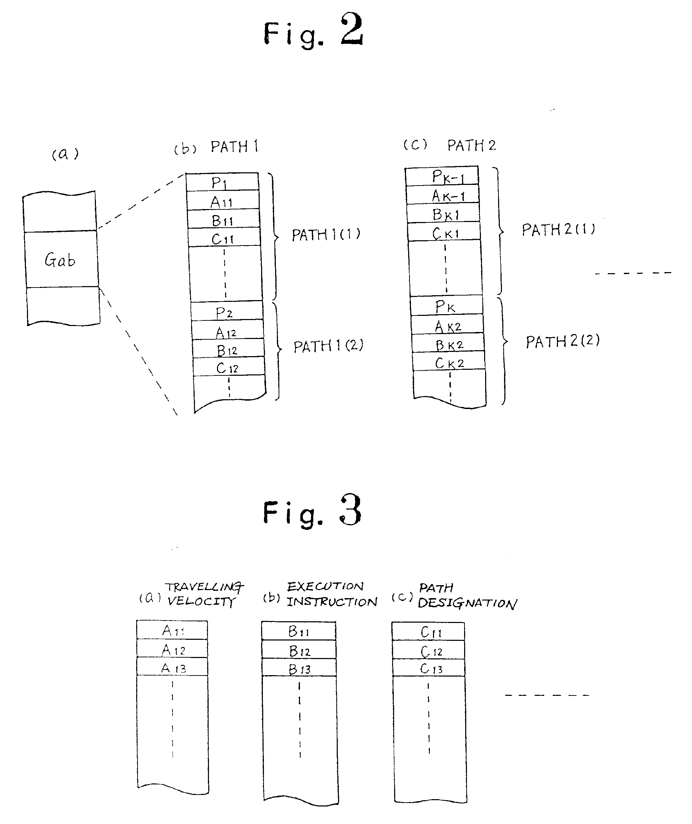

Fig.1 is a block diagram illustrating the general construction of a robot control apparatus to which the present invention is applied, Figs. 2(a), (b), (c), Figs. 3(a), (b), (c) and Figs. 4(a), (b), (c) are views for describing examples of the present invention, and Figs. 5(a), (b) are explanatory views of examples of the prior art.

An embodiment of the present invention will now be described in detail with reference to the drawings.

Fig. 1 is a block diagram illustrating the general construction of a robot control apparatus to which the present invention is applied. In Fig. 1, a memory (ROM) b, a memory (RAM) c, a teaching panel d, an axial controller e and a tape reader f are connected to a central processing unit (CPU) a via a bus line g. The tape reader f reads out data inputted from a tape h, and the axis controller outputs a predetermined command signal to a servo circuit i to control a servomotor j.

Various control programs to be executed by the CPU are stored in the memory (ROM) b. The memory (RAM) c stores command data inputted from the teaching panel d and tape reader f, as well as the results of processing executed by the CPU and other data.

The present embodiment is characterized in that there is provided means for gathering together a position data group P₁, P₂, P₃, P₄, ... and converting it into set-type command data "PATH 1", setting various data between position data P₁, P₂ as "PATH 1(1) and various data between position data P₂, P₃ as "PATH 1(2), ...., as shown in Fig. 4(a), and gathering together a position data group P_{K-1}, P_{K}, P_{K+1}, P_{K+2}, ... and converting it into set-type command data "PATH 2", setting various data between position data P_{K}₋₁, P_{K} as "PATH 2(1), setting various data between position data P_{K}, P_{K+1} as "PATH 2(2), ..., as shown in Fig. 4(b), and thereafter editing these set-type command data (hereinafter referred to as "set data") to create a robot motion program.

Figs. 2(a) - (c) and Figs. 3(a) - (c) are views for describing examples of the present invention.

Fig. 2(a) illustrates a main program. When a code Gab (where a, b each represent one integer from 0 to 9) is read out, the robot motion program edited into PATH 1 in Fig. 2(b), PATH 2 in Fig. 2(c),... is executed. This motion program is edited by the CPU a and storec in a specific area of the RAM.

Next, the formation of the set data converted into "PATH 1" corresponding to Fig. 4(a) will be described in accordance with Fig. 2(b) and Figs. 3(a), (b) and (c).

The "PATH 1" is composed of "PATH 1(1)" between position data P₁, P₂, "PATH 1(2)" between position data P₂, P₃, ..., as described above. Of these, the "PATH 1(1)" is data composed of the position data P₁, the travelling velocity A11 between P₁ and P₂, an instruction B11 to be executed at position P₁, such as an instruction for a specific motion of the robot hand, a path designation C11 for the path between P₁ and P₂, and an indication as to whether or not positioning at particular positions is to be neglected, etc. The indication regarding the neglecting of positioning is a command which simply causes the robot to pass by the vicinity of a position without a robot motion based on postioning being performed at the position.

Similarly, the data of "PATH 1(2)" corresponding to the interval between the position data P₂, P₃ of Fig. 4(a) is composed of position data P₂, travelling velocity A12, an execution instruction B12, a path designation C12, ..., and so on.

The set data "PATH 2" of Fig. 2(c) corresponding to Fig. 4(b) also is composed of "PATH 2(1)", "PATH 2(2)", ..., each of which is constituted by path data P_{K-1}, travelling velocity A_{K1}, execution instruction B_{K1}, path designation C_{K1}, ..., etc.

More specifically, in the present invention, various data at each of the commanded positions are converted into set data "PATH 1", which is composed of "PATH 1(1)", "PATH 2(1), ..., etc., the set data are stored in the RAM, and the set data "PATH 2" ... similarly stored in the RAM are suitably edited to form a robot motion program.

The robot control apparatus of the invention improves upon the conventional method of storing taught points. Even if there are many taught points for robot motion, conversion is made into set-type data which simultaneously incorporates various information such as travelling velocity at these positions besides the position data, and these data are stored. This makes the robot command data easy to manage.

## Claims

1. A robot control apparatus for programmably controlling a taught/playback-type robot, comprising:
a teaching panel (d) for teaching robot motion target positions (P) and motion velocities (A) along a predetermined robot motion path, thereby to create a plurality of robot command data to move the robot along the predetermined motion path; and
a data memory (c) for storing the robot command data;
characterised by:
data converting means (a) for converting said plurality of robot command data which defines the predetermined robot motion path into position data groups (e.g. P₁ to P₄) defining respective successive portions of said predetermined robot motion path, and for converting each of said position data groups (e.g. P₁ to P₄) into a set (e.g. PATH 1) of robot command data also comprising other robot command data, the data converting means (a) being operable to store the sets of robot command data in the data memory (c); and
processing control means (a) for creating robot motion data by editing the sets of robot command data in the data memory (c).

2. A robot control apparatus according to claim 1, wherein said other robot command data comprises path and other service code information taught to the robot.

## Patentansprüche

1. Roboter-Steuereinrichtung zum programmierbaren Steuern eines lern- und wiederausführfähigen Roboters, mit
einem Unterweisungs-Bedienungsfeld (d) zum Unterweisen des Roboters bezüglich Zielpositionen (P) und Geschwindigkeiten von Bewegungen (A) längs eines vorbestimmten Roboter-Bewegungswegs, um dadurch eine Vielzahl von Roboter-Befehlsdaten zum Bewegen des Roboters längs des vorbestimmten Bewegungswegs zu erzeugen, und
einem Datenspeicher (c) zum Speichern der Roboter-Befehlsdaten,
**gekennzeichnet** durch
ein Daten-Umsetzmittel (a) zum Umsetzen der Vielzahl von Roboter-Befehlsdaten, die den vorbestimmten Roboter-Bewegungsweg definieren, in Positions-Datengruppen (z. B. P₁ bis P₄), die betreffende aufeinanderfolgende Teile des vorbestimmten Roboter-Bewegungswegs definieren, und zum Umsetzen jeder der Positions-Datengruppen (z. B. P₁ bis P₄) in einen Satz (z. B. PATH 1) von Roboter-Befehlsdaten, die außerdem weitere Roboter-Befehlsdaten umfassen, wobei das Daten-Umsetzmittel (a) betreibbar ist, um die Sätze von Roboter-Befehlsdaten in dem Datenspeicher (c) zu speichern, und
ein Verarbeitungssteuermittel (a) zum Erzeugen von Roboter-Bewegungsdaten durch Aufbereiten der Sätze von Roboter-Befehlsdaten in dem Datenspeicher (c).

2. Roboter-Steuereinrichtung nach Anspruch 1, bei der die Roboter-Befehlsdaten Weg- und weitere Betriebscode-Information umfassen, die dem Roboter eingelernt ist.

## Revendications

1. Une unité de commande de robot pour commander de manière programmable un robot du type d'enseignement/reproduction, comprenant :
un panneau d'enseignement (d) pour enseigner des positions cible (P) de déplacement du robot et des vitesses de déplacement (A) le long d'un trajet de déplacement prédéterminé du robot, de manière ainsi à créer un ensemble de données d'ordre pour le robot afin de déplacer le robot le long du trajet de déplacement prédéterminé ; et
une mémoire de données (c) pour stocker les données d'ordre pour le robot ;
caractérisée par :
des moyens de conversion de données (a) pour convertir ledit ensemble de données d'ordre pour le robot qui définissent le trajet de déplacement prédéterminé du robot en groupes de données de position (par exemple, P₁ à P₄) définissant des parties successives respectives dudit trajet de déplacement prédéterminé du robot, et pour convertir chacun desdits groupes de données de position (par exemple, P₁ à P₄) en une série (par exemple, TRAJET 1) de données d'ordre pour le robot, comprenant également d'autres données d'ordre pour le robot, les moyens de conversion de données (a) étant actionnables pour stocker, dans la mémoire de données (c), les séries de données d'ordre pour le robot ; et
des moyens de commande de traitement (a) pour créer des données de déplacement pour le robot en éditant, dans la mémoire de données (c), les séries de données d'ordre pour le robot.

2. Une unité de commande de robot selon la revendication 1, dans laquelle lesdites autres données d'ordre pour le robot comprennent des informations de trajets et d'autres codes de service enseignés au robot.
